# EUROPÄISCHE PATENTSCHRIFT

(11) **EP 3 084 236 B1**
(45) Veröffentlichungstag und Bekanntmachung des Hinweises auf die Patenterteilung: **06.02.2019**
(21) Anmeldenummer: 14812258.3
(22) Anmeldetag: 16.12.2014
(51) Int. Cl.: F16B 5/02, F16B 19/02, F16B 43/00, F16B 19/14, F16B 19/00, F16B 33/00

(54) **BEFESTIGUNGSVORRICHTUNG**
ATTACHMENT DEVICE
DISPOSITIF DE FIXATION

(30) Priorität: 19.12.2013 EP 13198445
(43) Veröffentlichungstag der Anmeldung: 26.10.2016
(73) Patentinhaber: Hilti Aktiengesellschaft, 9494 Schaan (LI)
(72) Erfinder: LOR, Ferenc, 9470 Buchs (CH); SCHALLER, Zsolt, 9494 Schaan (LI); FROMMELT, Markus, 9494 Schaan (LI)
(74) Vertreter: Hilti Aktiengesellschaft Corporate Intellectual Property
(86) Internationale Anmeldenummer: PCT/EP2014/077959
(87) Internationale Veröffentlichungsnummer: WO 2015/091479

(56) Entgegenhaltungen:
- EP-A2- 2 372 174
- WO-A1-2013/045130
- CA-A- 644 779
- DE-A1-102007 043 283
- DE-U1-202006 000 666
- US-A1- 2004 105 735

## Beschreibung

### Technisches Gebiet

Die Erfindung betrifft eine Vorrichtung zur Befestigung eines ersten Gegenstandes an einem zweiten Gegenstand.

### Stand der Technik

Eine derartige Befestigungsvorrichtung ist in der DE 10 2010 003 130 A1 beschrieben. Die Befestigungsvorrichtung weist eine Spreizhülse und einen Aufweitdorn auf, wobei die Hülse ein erstes Lastangriffsmittel für den ersten Gegenstand und ein Widerlager für eine Aussenfläche des zweiten Gegenstands aufweist. Benachbart zu dem Widerlager ist ein Dichtelement angeordnet.

Eine weitere derartige Befestigungsvorrichtung ist aus der WO 2013/045130 A1 bekannt.

Bei solchen Befestigungsvorrichtungen besteht die einerseits die Gefahr, dass bei zu geringer Eintreibtiefe das Dichtelement nicht ausreichend komprimiert wird, um seine Dichtfunktion zu gewährleisten. Andererseits besteht die Gefahr, dass bei zu hoher Eintreibtiefe das Dichtelement zu stark verpresst wird und radial nach aussen hervortritt. Die Toleranz für die Eintreibtiefe ist daher begrenzt.

Aufgabe der Erfindung ist es, eine Vorrichtung zur Verfügung zu stellen, mit welcher die Dichtfunktion des Dichtelements innerhalb einer weiten Toleranz für die Eintreibtiefe gewährleistet ist, ohne dass das Dichtelement bei dessen Kompression übermässig weit radial hervortritt.

### Darstellung der Erfindung

Die Aufgabe wird gelöst durch eine Vorrichtung zur Befestigung eines ersten Gegenstands an einem zweiten Gegenstand, umfassend einen ein erstes Lastangriffsmittel aufweisenden Lastabschnitt, einen eine Eintreibrichtung definierenden Eintreibabschnitt, und ein Dichtelement für eine Abdichtung zwischen der Vorrichtung und dem zweiten Gegenstand, wobei das Dichtelement senkrecht zur Eintreibrichtung eine Breite b und in Eintreibrichtung eine Höhe h, welche grösser als die Breite b ist, aufweist, wobei das Dichtelement einen insbesondere kreisförmigen Dichtring mit einem Aussendurchmesser D und einem Innendurchmesser d umfasst, wobei 2*b=D-d, und der Aussendurchmesser D kleiner oder gleich einem grössten Durchmesser des Lastabschnitts, insbesondere des ersten Lastangriffsmittels, ist. Vorzugsweise ist h > 1,1 b, bevorzugt ist h > 1,5 b und besonders bevorzugt h > 1,8 b. Gegenüber vorbekannten Vorrichtungen wird so bei gleichem Volumen des Dichtelements eine grössere Höhe desselben erreicht, so dass das Dichtelement auch bei grösseren Schwankungen der Eintreibtiefe ausreichend komprimiert wird.

Der Aussendurchmesser D ist kleiner oder gleich einem grössten Durchmesser des Lastabschnitts, insbesondere des ersten Lastangriffsmittels, so dass der Dichtring nicht radial nach aussen übersteht. Bevorzugt ist der Innendurchmesser d kleiner oder gleich einem grössten Durchmesser des Eintreibabschnitts, so dass der Dichtring radial nach innen am Eintreibabschnitt anliegt, wodurch die Dichtfunktion unter Umständen verbessert wird.

Gemäss einer vorteilhaften Ausführungsform ist eine Querschnittsfläche des Dichtelements rechteckförmig. Gemäss einer weiteren vorteilhaften Ausführungsform ist eine Querschnittsfläche des Dichtelements oval oder elliptisch.

Gemäss einer vorteilhaften Ausführungsform umfasst die Befestigungsvorrichtung eine in Eintreibrichtung weisende Dichtfläche, an welcher das Dichtelement bevorzugt anliegt. Bevorzugt umfasst die Befestigungsvorrichtung einen die Dichtfläche tragenden Dichtflansch.

Gemäss einer vorteilhaften Ausführungsform umfasst der Lastabschnitt einen Schaft und eine das erste Lastangriffsmittel tragende Hülse. Bevorzugt trägt die Hülse auch die Dichtfläche, besonders bevorzugt den Flansch. Das erste Lastangriffsmittel umfasst vorteilhaft ein Gewinde.

Gemäss einer vorteilhaften Ausführungsform umfasst der Eintreibabschnitt einen Schaft. Bevorzugt umfasst der Eintreibabschnitt eine Nagelspitze. Gemäss einer weiteren vorteilhaften Ausführungsform umfasst der Eintreibabschnitt ein Schraubgewinde. Bevorzugt umfasst der Eintreibabschnitt eine Schraubenspitze oder Bohrspitze. Gemäss einer weiteren vorteilhaften Ausführungsform umfasst der Eintreibabschnitt eine Spreizhülse und einen Aufweitdorn.

### Ausführungsbeispiele

Die Erfindung wird nachstehend anhand von Ausführungsbeispielen unter Bezugnahme auf die Zeichnungen näher erläutert. Es zeigen:
- Fig.1: eine Aussparung,
- Fig. 2: eine Befestigungsvorrichtung,
- Fig. 3: eine Dichtelement im Querschnitt,
- Fig. 4: eine in eine Aussparung eingetriebene Befestigungsvorrichtung im Längsschnitt, und
- Fig. 5: eine in eine Aussparung eingetriebene Befestigungsvorrichtung im Längsschnitt.

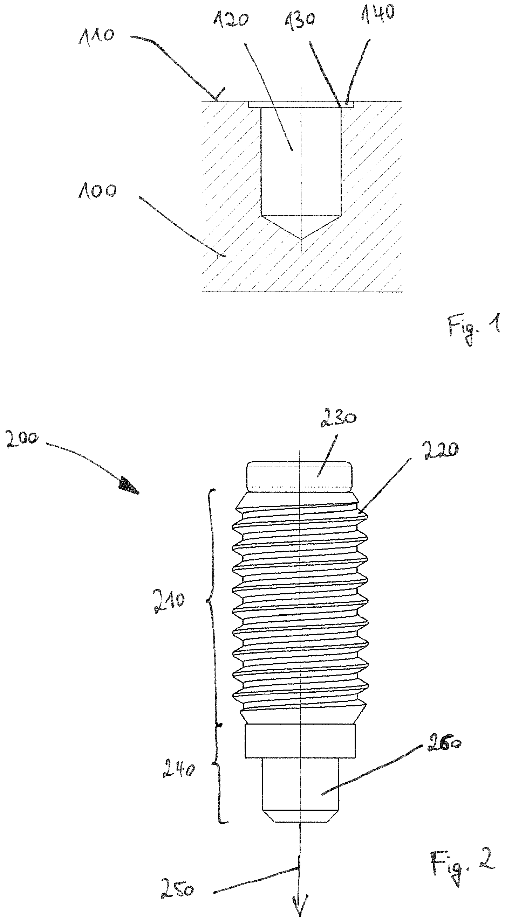

In Fig. 1 ist eine Platte 100 mit einer Oberfläche 110 dargestellt. Die Platte 100 besteht aus einem Metall oder einer Legierung, beispielsweise Stahl. Die Oberfläche 110 ist mit einer Lack- und/oder Schutzschicht, beispielsweise zum Korrosionsschutz, versehen. Die Platte 100 ist mit einem Sackloch 120 versehen, welches von der Oberfläche 110 aus mit Hilfe eines Stufenbohrers in die Platte 100 hineingebohrt wurde. Die Stufe des Stufenbohrers, die als Anschlag dient, um eine vorbestimmte Bohrtiefe zu gewährleisten, hinterlässt am Rand 130 des Sacklochs 120 in der Oberfläche 110 eine Vertiefung 140, beispielsweise einen Abdruck oder Kratzer, wodurch die Schutzschicht unter Umständen verletzt wird. Es ist daher wünschenswert, die Vertiefung 140 zusammen mit dem Sackloch 120 gegenüber der Umgebung abzudichten, insbesondere staub-, luft- und/oder wasserdicht. Um diese Abdichtung zu erleichtern, wird ein Stufenbohrer mit einer möglichst schmalen Stufe verwendet, so dass die Vertiefung 140 in radialer Richtung ebenfalls möglichst schmal ist.

In Fig. 2 ist eine Befestigungsvorrichtung 200 zur Befestigung eines nicht gezeigten ersten Gegenstandes, wie beispielsweise einem Trägerteil oder Anbauteil, an einem ebenfalls nicht gezeigten zweiten Gegenstand, wie beispielsweise der Platte 100 in Fig. 1, dargestellt. Die Befestigungsvorrichtung 200 weist einen Lastabschnitt 210 mit einem als Gewinde 220 ausgebildeten ersten Lastangriffsmittel auf. Weiterhin weist die Befestigungsvorrichtung einen Kopf 230 sowie einen Eintreibabschnitt 240 auf, welcher eine Eintreibrichtung 250 definiert. Der Eintreibabschnitt 240 weist eine im Wesentlichen zylindrische Mantelfläche 260 auf, mit welcher er beispielsweise in ein Sackloch gemäss Fig. 1 einpressbar ist, um die Befestigungsvorrichtung 200 reibschlüssig in dem Sackloch zu befestigen. Die Mantelfläche 260 dient also als zweites Lastangriffsmittel. Bei nicht gezeigten Ausführungsbeispielen ist der Eintreibabschnitt nach Art eines Nagels, einer Schraube, eines Spreizstifts oder Ähnlichen ausgebildet. Schliesslich weist die Befestigungsvorrichtung ein als umlaufender Dichtring 270 ausgebildetes Dichtelement für eine Abdichtung zwischen der Befestigungsvorrichtung 200 und dem zweiten Gegenstand auf.

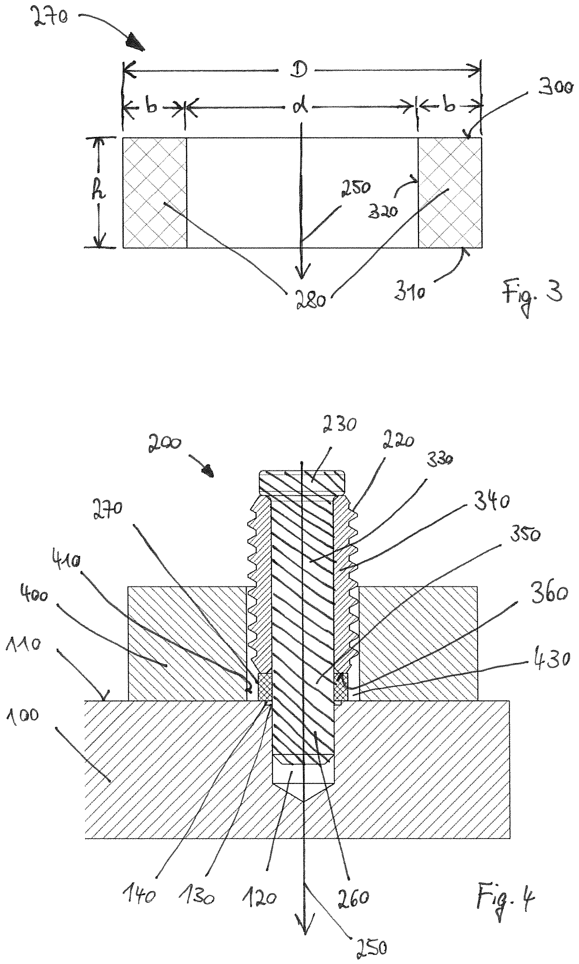

In Fig. 3 ist der Dichtring 270 in einer Querschnittsansicht vergrössert dargestellt. Der Dichtring besteht aus einem elastischen Material, beispielsweise aus einem Elastomer, EPDM, Neopren oder Gummi. Der Dichtring hat eine Kreisform mit einem Aussendurchmesser D und einem Innendurchmesser d. Jede der beiden gezeigten Schnittflächen 280 des Dichtrings 270 ist rechteckig geformt. Bei nicht gezeigten Ausführungsbeispielen sind die entsprechenden Schnittflächen des Dichtelements oval oder elliptisch geformt. Die Schnittflächen 280 und damit der Dichtring 270 haben jeweils senkrecht zur Eintreibrichtung eine Breite b und in Eintreibrichtung eine Höhe h, welche grösser als die Breite b ist, aufweist. Aus der Zeichnung ist ersichtlich, dass die Breite b der halben Differenz zwischen dem Aussendurchmesser D und dem Innendurchmesser d entspricht. Im vorliegenden Beispiel ist das Verhältnis zwischen der Höhe h und der Breite b etwa 2, womit beispielsweise bei einem Aussendurchmesser von D = 8 mm gute Ergebnisse hinsichtlich der Dichtfunktion erzielt werden. Bei nicht gezeigten Ausführungsbeispielen ist das Verhältnis kleiner oder grösser als 2. Für einen Aussendurchmesser von D = 10 mm haben sich bei einem Verhältnis zwischen der Höhe h und der Breite b von etwa 1,7 gute Ergebnisse gezeigt. Zum Abdichten weist der Dichtring 270 eine entgegen der Eintreibrichtung 250 weisende erste Dichtfläche 300, eine in Eintreibrichtung 250 weisende zweite Dichtfläche 310 sowie eine radial nach innen weisende dritte Dichfläche 320 auf. Die erste Dichtfläche 300 und die zweite Dichtfläche 310 sind eben und senkrecht zur Eintreibrichtung 250 ausgerichtet. Die dritte Dichtfläche 320 ist in Form einer Zylindermantelfläche gekrümmt und parallel zur Eintreibrichtung 250 ausgerichtet. Die dritte Dichtfläche 320 eignet sich daher, an der zylindrischen Mantelfläche 260 des Eintreibabschnitts 240 gemäss Fig. 2 dichtend anzuliegen.

In Fig. 4 ist ein Längsschnitt der Befestigungsvorrichtung 200 gemäss Fig. 2 nach deren Befestigung an der Platte 100 gemäss Fig. 1 dargestellt. Die Befestigungsvorrichtung 200 wurde dazu mit ihrem Eintreibabschnitt 240 in das Sackloch 120 eingetrieben, beispielsweise durch einen oder mehrere Schläge auf den Kopf 230, insbesondere mit Hilfe eines nicht gezeigten Bolzensetzgeräts. Die Befestigungsvorrichtung besteht aus einem Stift 330 und einer Hülse 340. Der Stift 330 umfasst den Kopf 230 sowie einen durchgehenden Schaft 350, welcher im Lastabschnitt 210 der Befestigungsvorrichtung 200 die Hülse 340 trägt und im Eintreibabschnitt 240 der Befestigungsvorrichtung 200 die zylindrische Mantelfläche 260 bildet. Die Hülse 340 ist beispielsweise mittels eines Presssitzes fest mit dem Schaft 350 verbunden und trägt auf ihrer Aussenseite das Gewinde 220. Darüber hinaus weist die Hülse 340 eine in Eintreibrichtung 250 weisende und ringförmige vierte Dichtfläche 360 auf.

Zur Abdichtung des Sacklochs 120 gegenüber der Umgebung, um beispielsweise den Eintritt von korrosionsfördernder Feuchtigkeit zu verhindern, liegt der Dichtring 270 einerseits mit seiner ersten Dichtfläche 300 an der vierten Dichtfläche 360 und andererseits mit seiner zweiten Dichtfläche 310 an der Oberfläche 110 der Platte 100 an, wobei die Vertiefung 140 am Rand 130 des Sacklochs 120 möglichst vollständig von der zweiten Dichtfläche 310 überdeckt wird. Darüber hinaus liegt die dritte Dichtfläche 320 des Dichtrings 270 an dem Schaft 350 an. Zu diesem Zweck ist der Innendurchmesser d des Dichtrings 270 kleiner oder gleich einem Aussendurchmesser des Schaftes 350. Die Hülse 340 hat an ihren Enden in der Eintreibrichtung 250 beziehungsweise entgegen der Einrtreibrichtung 250 die gleiche Geometrie, so dass die Hülse 340 in beiden möglichen Orientierungen auf dem Stift 330 befestigt werden kann.

An der Befestigungsvorrichtung 200 ist ein Anbauteil 400 befestigt, welches eine als Bohrung 410 ausgebildete Durchgangsöffnung aufweist, mit welcher das Anbauteil über den Lastabschnitt 210 der Befestigungsvorrichtung 200 gesteckt wird. Die Befestigung wird mittels einer nicht gezeigten Schraubenmutter, beispielsweise einer Hutmutter, bewerkstelligt, welche auf das Gewinde 220 aufgeschraubt wird. Bei einem nicht gezeigten Ausführungsbeispiel weist die Bohrung des Anbauteils ein Innengewinde auf und wird auf das Gewinde der Befestigungsvorrichtung aufgeschraubt, so dass eine zusätzliche Schraubenmutter entfallen kann. Damit das Anbauteil 400 beim Aufstecken auf die Befestigungsvorrichtung 200 ungestört zur Anlage an die Oberfläche 110 der Platte 100 kommt, ist der Aussendurchmesser D des Dichtrings 270 kleiner oder gleich einem Innendurchmesser der Bohrung 410. Damit der Innendurchmesser der Bohrung 410 möglichst klein gewählt werden kann, ist der Aussendurchmesser D des Dichtrings 270 kleiner oder gleich einem Aussendurchmesser des Gewindes 220, so dass der Dichtring 270 nicht gegenüber dem Gewinde 220 radial nach aussen übersteht. Bei nicht gezeigten Beispielen, welche nicht zum beanspruchten Schutzumfang gehören, steht der Dichtring gegenüber dem Gewinde radial um 15% beziehungsweise 0,5 mm, oder um 7,5% beziehungsweise 0,25 mm oder um 3% beziehungsweise 0,1 mm über, wobei der Aussendurchmesser D des Dichtrings bevorzugt kleiner oder gleich dem Innendurchmesser der Bohrung ist.

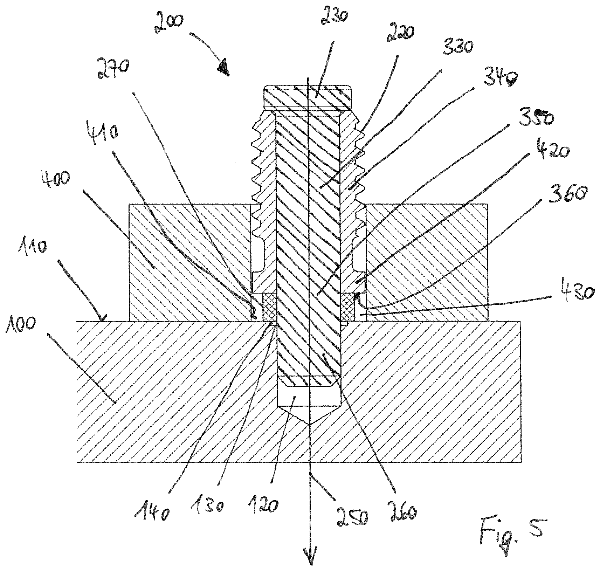

In Fig. 5 ist ein Längsschnitt einer weiteren Ausführungsform einer Befestigungsvorrichtung 200 nach deren Befestigung an der Platte 100 gemäss Fig. 1 dargestellt, wobei entsprechende Elemente mit gleichen Bezugszeichen versehen sind. Hier weist die Hülse 340 einen die vierte Dichtfläche 360 tragenden Dichtflansch 420 auf. Die vierte Dichtfläche 360 ist eben und senkrecht zur Eintreibrichtung 250 ausgerichtet. Darüber hinaus erstreckt sich der Flansch 420 und damit auch die vierte Dichtfläche 360 radial bis zu einem Durchmesser, der gleich oder nur wenig kleiner ist als der Aussendurchmesser des Gewindes 220. Damit ist eine grosse vierte Dichtfläche 360 realisiert.

Die beiden gezeigten Ausführungsbeispiele gemäss Fig. 4 und 5 sind bei relativ geringer Eintreibtiefe dargestellt, so dass der Dichtring 270 jeweils nur wenig in Eintreibrichtung 250 komprimiert und damit nur wenig oder noch nicht verformt ist. Dementsprechend ist radial ausserhalb des Dichtrings 270 ein Freiraum 430 gebildet, welcher aufgrund der erfindungsgemässen Geometrie des Dichtrings 270 ein relativ grosses Volumen hat. Bei grösserer Eintreibtiefe ist der Abstand zwischen der vierten Dichtfläche 360 der Befestigungsvorrichtung 200 und der Oberfläche 110 der Platte 100 kleiner, so dass der Dichtring 270 stärker in Eintreibrichtung 250 komprimiert und verformt wird. Dadurch wird der Freiraum 430 zwar kleiner, der Dichtring 270 steht jedoch auch bei einer viel grösseren Eintreibtiefe noch nicht radial über den Aussendurchmesser des Gewindes 220 hinaus. Somit ist eine weite Toleranz für die Eintreibtiefe gewährleistet, ohne dass eine Anlage des Anbauteils 400 an der Oberfläche 110 der Platte 100 behindert würde.

Die Erfindung wurde anhand von Beispielen einer Vorrichtung zur Befestigung eines ersten Gegenstandes an einem zweiten Gegenstand beschrieben. Die Merkmale der beschriebenen Ausführungsformen sind dabei auch beliebig miteinander innerhalb einer einzigen Befestigungsvorrichtung kombinierbar. Es wird darauf hingewiesen, dass die erfindungsgemässen Vorrichtungen auch für andere Zwecke geeignet sind.

## Patentansprüche

1. Vorrichtung (200) zur Befestigung eines ersten Gegenstands an einem zweiten Gegenstand, umfassend einen ein erstes Lastangriffsmittel (220) aufweisenden Lastabschnitt (210), einen eine Eintreibrichtung definierenden Eintreibabschnitt (240), und ein Dichtelement (270) für eine Abdichtung zwischen der Vorrichtung und dem zweiten Gegenstand, wobei das Dichtelement (270) senkrecht zur Eintreibrichtung eine Breite b und in Eintreibrichtung eine Höhe h, welche grösser als die Breite b ist, aufweist, wobei das Dichtelement (270) einen insbesondere kreisförmigen Dichtring mit einem Aussendurchmesser D und einem Innendurchmesser d umfasst, wobei 2*b=D-d, **dadurch gekennzeichnet, dass** der Aussendurchmesser D kleiner oder gleich einem grössten Durchmesser des Lastabschnitts (210), insbesondere des ersten Lastangriffsmittels (220), ist.

2. Vorrichtung nach Anspruch 1, wobei h > 1,5 b und insbesondere h > 1,8 b.

3. Vorrichtung nach einem der vorhergehenden Ansprüche, wobei eine Querschnittsfläche des Dichtelements (270) rechteckförmig ist.

4. Vorrichtung nach einem der vorhergehenden Ansprüche, wobei eine Querschnittsfläche des Dichtelements (270) oval oder elliptisch ist.

5. Vorrichtung nach einem der vorhergehenden Ansprüche, umfassend eine in Eintreibrichtung weisende Dichtfläche (310).

6. Vorrichtung nach Anspruch 5, umfassend einen die Dichtfläche (310) tragenden Dichtflansch.

7. Vorrichtung nach einem der vorhergehenden Ansprüche, wobei der Lastabschnitt (210) einen Schaft und eine das erste Lastangriffsmittel (220) und insbesondere die Dichtfläche tragende Hülse umfasst.

8. Vorrichtung nach einem der vorhergehenden Ansprüche, wobei das erste Lastangriffsmittel (220) ein Gewinde umfasst.

9. Vorrichtung nach einem der vorhergehenden Ansprüche, wobei der Innendurchmesser d kleiner oder gleich einem grössten Durchmesser des Eintreibabschnitts (240) ist.

10. Vorrichtung nach einem der vorhergehenden Ansprüche, wobei der Eintreibabschnitt (240) einen Schaft und insbesondere eine Nagelspitze umfasst.

11. Vorrichtung nach einem der vorhergehenden Ansprüche, wobei der Eintreibabschnitt (240) ein Schraubgewinde und insbesondere eine Schraubenspitze umfasst.

12. Vorrichtung nach einem der vorhergehenden Ansprüche, wobei der Eintreibabschnitt (240) eine Spreizhülse und einen Aufweitdorn umfasst.

## Claims

1. Device (200) for fastening a first object to a second object, comprising a load section (210) having a first load application means (220), a driving section (240) defining a driving direction and a sealing element (270) for a seal between the device and the second object, in which the sealing element (270) has a width b perpendicular to the driving direction and a height h in the driving direction, which is greater than the width b, in which the sealing element (270) comprises a particularly circular sealing ring with an outside diameter D and an inside diameter d, in which 2*b = D - d, **characterised in that** the outside diameter D is smaller or the same as the largest diameter of the load section (210), particularly the first load application means (220).

2. Device according to claim 1, in which h > 1.5 b and particularly h > 1.8 b.

3. Device according to one of the previous claims, in which a cross sectional surface of the sealing element (270) is rectangular.

4. Device according to one of the previous claims, in which a cross sectional surface of the sealing element (270) is oval or elliptical.

5. Device according to one of the previous claims, comprising a sealing surface (310) pointing in the driving direction.

6. Device according to claim 5, comprising a sealing flange carrying the sealing surface (310).

7. Device according to one of the previous claims, in which the load section (210) comprises a shaft and a sleeve carrying the first load application means (220) and the sealing surface in particular.

8. Device according to one of the previous claims, in which the first load application means (220) comprises a thread.

9. Device according to one of the previous claims, in which the inside diameter d is smaller or the same as the largest diameter of the driving section (240).

10. Device according to one of the previous claims, in which the driving section (240) comprises a shaft and a nail tip in particular.

11. Device according to one of the previous claims, in which the driving section (240) comprises a screw thread and a screw tip in particular.

12. Device according to one of the previous claims, in which the driving section (240) comprises an expansion sleeve and an expanding mandrel.

## Revendications

1. Dispositif (200) destiné à fixer un premier objet sur un second objet, comportant une partie de charge (210) ayant des premiers moyens d'application de charge (220), une partie d'enfoncement (240) définissant une direction d'enfoncement et un élément d'étanchéité (270) pour réaliser l'étanchéité entre le dispositif et le second objet, dans lequel l'élément d'étanchéité (270) a une largeur b perpendiculairement à la direction d'enfoncement et une hauteur h dans la direction d'enfoncement qui est supérieure à la largeur b, dans lequel l'élément d'étanchéité (270) comporte une bague d'étanchéité en particulier circulaire ayant un diamètre extérieur D et un diamètre intérieur d, dans lequel 2*b = D-d, **caractérisé en ce que** le diamètre extérieur D est inférieur ou égal au plus grand diamètre de la partie de charge (210), en particulier des premiers moyens d'application de charge (220).

2. Dispositif selon la revendication 1, dans lequel h > 1, 5 b et en particulier h > 1,8 b.

3. Dispositif selon l'une des revendications précédentes, dans lequel une section transversale de l'élément d'étanchéité (270) est rectangulaire.

4. Dispositif selon l'une des revendications précédentes, dans lequel une section transversale de l'élément d'étanchéité (270) est ovale ou elliptique.

5. Dispositif selon l'une des revendications précédentes, comportant une surface d'étanchéité (310) pointant dans la direction d'enfoncement.

6. Dispositif selon la revendication 5, comportant une bride d'étanchéité portant la surface d'étanchéité (310).

7. Dispositif selon l'une des revendications précédentes, dans lequel la partie de charge (210) comporte une tige et une douille portant les premiers moyens d'application de charge (220) et en particulier la surface d'étanchéité.

8. Dispositif selon l'une des revendications précédentes, dans lequel les premiers moyens d'application de charge (220) comportent un filetage.

9. Dispositif selon l'une des revendications précédentes, dans lequel le diamètre intérieur d est inférieur ou égal au plus grand diamètre de la partie d'enfoncement (240).

10. Dispositif selon l'une des revendications précédentes, dans lequel la partie d'enfoncement (240) inclut une tige et en particulier une pointe de clou.

11. Dispositif selon l'une des revendications précédentes, dans lequel la partie d'enfoncement (240) inclut un filetage de vis et en particulier une pointe de vis.

12. Dispositif selon l'une des revendications précédentes, dans lequel la partie d'enfoncement (240) inclut une douille d'expansion et un mandrin d'évasement.
